# EUROPEAN PATENT APPLICATION

(11) **EP 4 629 231 A1**
(43) Date of publication of application: **08.10.2025**
(21) Application number: 23896033.0
(22) Date of filing: 05.07.2023
(51) Int. Cl.: G10L 15/22, G10L 15/26

(54) **VOICE INTERACTION METHOD AND APPARATUS, COMPUTER DEVICE, AND COMPUTER READABLE STORAGE MEDIUM**

(30) Priority: 01.12.2022 CN 202211539085
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: HUANG, Chao, Ningbo, Zhejiang 315899 (CN)
(74) Representative: Kraus & Lederer PartGmbB
(86) International application number: PCT/CN2023/105945
(87) International publication number: WO 2024/113870

(57) **Abstract**

A voice interaction method and apparatus, a computer device, and a computer readable storage medium, relating to the technical field of voice control. The method comprises: receiving a user voice request by means of a first interaction page of a target application (S110); matching, in first control attribute data, semantic text data corresponding to the user voice request, and determining an interaction target control corresponding to the semantic text data (S120); generating a control operation instruction on the basis of a control operation type of the interaction target control (S130); and executing the control operation instruction to output response content of the user voice request (S140).

## Description

### CROSS-REFERENCE TO RELATED APPLICATIONS

The present application claims priority to Chinese patent application No. 202211539085.1, titled "VOICE INTERACTION METHOD AND APPARATUS, COMPUTER DEVICE, AND COMPUTER READABLE STORAGE MEDIUM" and filed on December 1, 2022, the entire contents of which are incorporated herein by reference.

### FIELD

The present disclosure relates to the field of voice control technologies, and more particularly, to a voice interaction method, an apparatus, a computer device, and a computer-readable storage medium.

### BACKGROUND

Voice interaction technology is widely used in various intelligent terminals, which enables users to control the intelligent terminals in a contactless way. Using voice interaction technology to achieve user's control on software in an automotive central control system has important practical significance for ensuring vehicle driving safety.

In the related art, when a target application in the automotive central control system is manipulated through voice interaction, an interface for realizing voice interaction operation needs to be additionally developed in the target application, which increases development costs of the target application.

### SUMMARY

The present disclosure aims to solve at least one of the technical problems in the related art. Therefore, a first objective of the present disclosure is to provide a voice interaction method. By decoupling voice recognition and semantic analysis of a user from a specific target application control, development costs of a target application in an automotive central control system is reduced, and a situation in which a third-party target application mounted in the automotive central control system loses a voice interaction control function due to an inability to interface with a voice operation interface is simultaneously avoided.

A second objective of the present disclosure is to provide a voice interaction apparatus.

A third objective of the present disclosure is to provide a computer device.

A fourth objective of the present disclosure is to provide a computer-readable storage medium.

To achieve the above objectives, embodiments in a first aspect of the present disclosure provide a voice interaction method applied to an automotive central control system. The method includes: receiving a user voice request through a first interaction page of a target application, wherein a target manipulation control is displayed on the first interaction page, the target manipulation control is a control capable of being manipulated and is determined among the controls displayed on the first interaction page of the target application based on a control type in a control association configuration file, the target manipulation control corresponds to first control attribute data, and the first control attribute data is generated based on control identification information, a control text, and a control number of the target manipulation control when switching from a second interaction page to the first interaction page is monitored; matching semantic text data corresponding to the user voice request in the first control attribute data to determine an interaction target control corresponding to the semantic text data; generating a control operation instruction based on a control operation type of the interaction target control; and executing the control operation instruction to output a response to the user voice request.

According to an embodiment of the present disclosure, when a control of the target application is updated, the control association configuration file is modified to generate a new control association configuration file, the new control association configuration file being used to determine the target manipulation control on an updated interaction page of the target application.

According to an embodiment of the present disclosure, second control attribute data corresponding to the target manipulation control on the second interaction page is stored in a cache space. The method further includes at least one of the following: when the second control attribute data is inconsistent with the first control attribute data, clearing the second control attribute data in the cache space and storing the first control attribute data in the cache space; and when the second control attribute data is consistent with the first control attribute data, retaining the second control attribute data in the cache space and discarding the first control attribute data.

According to an embodiment of the present disclosure, the first control attribute data corresponding to the control displayed on the first interaction page is obtained by at least one of the following: obtaining, based on a message queue, the first control attribute data corresponding to the control displayed on the first interaction page; obtaining, when no pop-up window appears on the first interaction page, the first control attribute data corresponding to other controls on the first interaction page except a progress control by calling an auxiliary service function of an operation system; obtaining, when the pop-up window appears on the first interaction page, the first control attribute data corresponding to the control displayed on the first interaction page by an Aspect interception method; and obtaining, when the first interaction page has the progress control, the first control attribute data corresponding to the progress control on the first interaction page by the Aspect interception method.

According to an embodiment of the present disclosure, the target application has a behavior analysis module and a control operation module. The first control attribute data is generated by: generating, by the control operation module, the first control attribute data based on the control identification information, the control text, and the control number of the target control when the switching from the second interaction page to the first interaction page is monitored; and calling a control registration interface of the behavior analysis module, and registering the first control attribute data to the behavior analysis module.

According to an embodiment of the present disclosure, said registering the first control attribute data to the behavior analysis module includes: registering the first control attribute data to the behavior analysis module according to a predefined control association rule in the control association configuration file.

According to an embodiment of the present disclosure, the method further includes, prior to said executing the control operation instruction: receiving, via an instruction sending interface of the control operation module, the control operation instruction sent by the behavior analysis module. Said executing the control operation instruction includes: calling a control operation interface of the control operation module and executing the control operation instruction for the interaction target control.

According to an embodiment of the present disclosure, the first control attribute data includes the control text of the control. Said matching the semantic text data corresponding to the user voice request in the first control attribute data to determine the interaction target control corresponding to the semantic text data includes: determining the interaction target control corresponding to the semantic text data based on a matching result between the semantic text data corresponding to the user voice request and the control text of the control.

To achieve the above objectives, embodiments in a second aspect of the present disclosure provide a voice interaction apparatus applied to an automotive central control system. The apparatus includes: a receiving module configured to receive a user voice request through a first interaction page of a target application, wherein a target manipulation control is displayed on the first interaction page, the target manipulation control is a control capable of being manipulated and is determined among controls displayed on the first interaction page of the target application based on a control type in a control association configuration file, the target manipulation control corresponds to first control attribute data, and the first control attribute data is generated based on control identification information, a control text, and a control number of the target manipulation control when switching from a second interaction page to the first interaction page is monitored; a matching module configured to match semantic text data corresponding to the user voice request in the first control attribute data to determine an interaction target control corresponding to the semantic text data; an instruction generation module configured to generate a control operation instruction based on a control operation type of the interaction target control; and an instruction execution module configured to execute the control operation instruction to output a response to the user voice request.

To achieve the above objectives, embodiments in a third aspect of the present disclosure provide a computer device. The computer device includes a memory and a processor. The memory has a computer program stored thereon, and the processor implements, when executing the computer program, steps of the method of any of the above embodiments.

To achieve the above objectives, embodiments in a fourth aspect of the present disclosure provide a computer-readable storage medium having a computer program stored thereon. The computer program, when executed by a processor, implements steps of the method of any of the above embodiments.

According to various embodiments provided by the present disclosure, by adopting a method in which the auxiliary service function of the operation system cooperates with the Aspect interception method, operation control on any target application mounted in the automotive central control system can be realized. Also, the target application does not need to interface with a voice operation interface, which greatly reduces development costs of the target application, and avoids a situation in which a third-party target application loses a voice interaction function due to an inability to interface with the voice operation interface. Through the control association configuration file, control operation of the target application can be added or modified without modifying control obtaining and control operation codes. Through rule filtering and message queue caching, the number and frequency of obtaining controls on the interaction page can be controlled, which can avoid a situation in which a frequency of obtaining control identification information and other data is too high due to frequent changes in contents of the interaction page, ensuring voice interaction performance of the automotive central control system.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1a is a schematic diagram showing an application scenario of a voice interaction method according to an embodiment of the present specification.
FIG. 1b is a schematic flowchart of a voice interaction method according to an embodiment of the present specification.
FIG. 2 is a schematic flowchart of a voice interaction method according to an embodiment of the present specification.
FIG. 3 is a schematic diagram of a first interaction page with a pop-up window according to an embodiment of the present specification.
FIG. 4 is a schematic flowchart of obtaining first control attribute data according to an embodiment of the present specification.
FIG. 5a is a schematic diagram showing a page with a list control according to an embodiment of the present specification.
FIG. 5b is a schematic flowchart showing an interaction between a control operation module and a behavior analysis module according to an embodiment of the present specification.
FIG. 5c is a schematic flowchart showing an interaction between a behavior analysis module and a control operation module according to an embodiment of the present specification.
FIG. 6 is a schematic flowchart showing an interaction among a semantic analysis module, a behavior analysis module, and a control operation module according to an embodiment of the present specification.
FIG. 7 is a block diagram of a voice interaction apparatus according to an embodiment of the present specification.
FIG. 8 is a block diagram of a computer device according to an embodiment of the present specification.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

With the development of intelligence and voice technology, voice interaction technology is widely used in various intelligent terminals, which enables users to control the intelligent terminals in a contactless way. In the field of automotive industry, a user needs to hold a steering wheel with both hands during driving. Also, it has certain danger if the user manually controls the software on an on-board central control screen while driving. Therefore, it is of great practical significance to realize user's control on the software in an automotive central control system through voice interaction technology, which has received particularly wide attention in the field of automotive industry.

Some car companies have conducted certain research on voice interaction control technology. In related technologies, voice control software is usually used to realize voice interaction between the user and a target application in the automotive central control system. In an interaction scenario, the voice control software continuously receives a voice spoken by the user through a voice module, parses the voice to obtain a semantic text, analyzes the semantic text to obtain behavior operation expected by the user, and calls an operation interface of the target application to realize functions that need to be operated in the interface. For example, when navigation application software is running, the user speaks a voice of "Searching for the Oriental Pearl Tower". The voice module parses the received voice, and obtains that the user needs to search for a location of the Oriental Pearl Tower in a navigation application program. The voice module calls an interface of the navigation application software based on an analysis result, pops up a search box, inputs a search parameter "Oriental Pearl Tower" in the search box, and triggers a search button, in such a manner that routes to the Oriental Pearl Tower can be obtained. This way requires that the target application mounted in the automotive central control system supports customization, which can additionally develop an interface for voice interaction operation. When new functions appear in the target application, new interfaces need to be developed, which has high development costs and is not flexible enough. For the target application that does not support customization, voice operation and control are unable to be achieved. In the related art, a control obtaining and operation method based on Aspect is also adopted, which can realize a control operation function of the target application based on the voice interaction at low costs, but the target application is required to integrate a Jar package based on the Aspect. If a third-party target application does not integrate the relevant Jar package, it is unable to interface with the control operation function based on voice interaction.

However, a user's expectation for a voice interaction function of the automotive central control system is that any operation function on an automotive central control screen can be controlled through voice interaction. That is, a see-and-say function can be realized. Therefore, it is necessary to provide a voice interaction method, an apparatus, a computer device, and a computer-readable storage medium. By adopting a way in which an auxiliary service function of an operation system cooperates with an Aspect interception method, controls on a current interaction page are obtained and operated, which can realize operation control of any target application mounted in the automotive central control system. Also, the target application does not need to interface with a voice operation interface, which greatly reduces development costs of the target application, and avoids a situation in which the third-party target application loses the voice interaction function due to an inability to interface with the voice operation interface. Through a control association configuration file, the control operation of the target application can be added or modified without modifying control obtaining and control operation codes. Through rule filtering and message queue caching, the number and frequency of obtaining controls on the interaction page can be controlled, which can avoid a situation in which a frequency of obtaining control identification information and other data is too high due to frequent changes in contents of the interaction page, ensuring voice interaction performance.

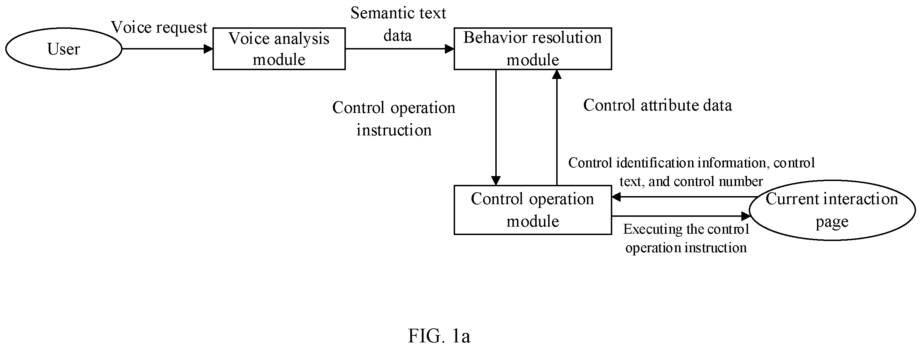

FIG. 1a is a schematic diagram showing an application scenario of a voice interaction method, an apparatus, a computer device, and a computer-readable storage medium according to an embodiment of the present specification. Taking the voice interaction method in the automotive central control system as an example, for the target application running on the automotive central control screen, the current interaction page of the target application is monitored by a control operation module. When the content of the current interaction page is monitored to change, control identification information, a control text, and a control number corresponding to the control on the changed current interaction page are obtained through the control operation module, and these data are configured according to a predefined control association rule in the control association configuration file. The configured content is assembled into control attribute data, and registered to a behavior analysis module through a control registration interface defined by the behavior analysis module, for subsequent generation of a corresponding control operation instruction.

When the user sends a voice request for the current interaction page, a semantic analysis module can receive the voice request of the user, perform text conversion and semantic analysis on the voice request, and parse and obtain corresponding semantic text data, to send the corresponding semantic text data to the behavior analysis module. The behavior analysis module receives the semantic text data, matches the text contained in the semantic text data in the control text of the control attribute data corresponding to the control on the current interaction page, finds the control corresponding to the matched control text, determines the control as an interaction target control, and identifies a control operation type corresponding to the interaction target control to generate the control operation instruction for the interaction target control. The behavior analysis module sends the generated control operation instruction to the control operation module through an instruction sending interface. Subsequent to receiving the control operation instruction through the control operation module, the control operation interface is called to execute the corresponding control operation instruction on the interaction target control. An execution result may be displayed on the automotive central control screen. Therefore, through the three modules of semantic analysis, behavior analysis, and control operation that are divided based on a process of voice interaction, decoupling of semantic analysis, behavior analysis, and specific control operation can be realized. Also, for the target application mounted in the automotive central control system, the see-and-say function can be realized subsequent to configuration based on the control association configuration file without additionally developing interfaces for the target application.

In this scenario example, the control operation module monitors the interaction page, obtains the control identification information and other data corresponding to the control, and executes the corresponding control operation instruction on the control. These operations are implemented based on an AccessibilityService and Aspect method, which can meet operation requirements of all types of controls. In addition, the number of obtained control identification information and other data corresponding to the control is controlled through the control type in the control association configuration file, subsequent to monitoring the content changes of the interaction page, and the frequency of obtaining the control identification information and other data corresponding to the control is controlled through a message queue, in such a manner that when the content changes frequency of the current interaction page on the automotive central control screen is too high, consumption of the automotive central control system is reduced.

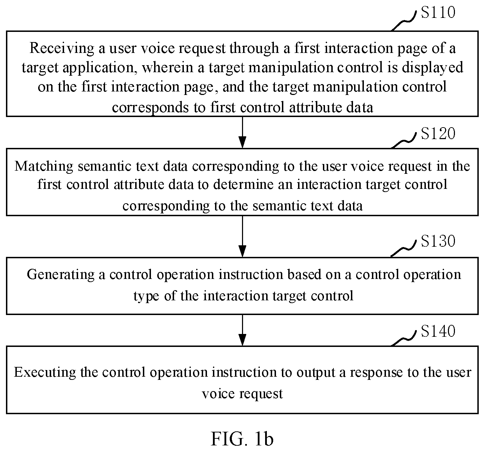

Embodiments of the present specification provide a voice interaction method applied to an automotive central control system. Referring to FIG. 1b, the method may include the following operations.

At S110, a user voice request is received through a first interaction page of a target application. A target manipulation control is displayed on the first interaction page. The target manipulation control is a control capable of being manipulated and is determined among the controls displayed on the first interaction page of the target application based on a control type in a control association configuration file. The target manipulation control corresponds to first control attribute data. The first control attribute data is generated based on control identification information, a control text, and a control number of the target manipulation control when switching from a second interaction page to the first interaction page is monitored.

The first interaction page is a current interaction page when the target application in the automotive central control system is running. The control association configuration file may be used to select and perform filtering on the control type. The first control attribute data may be used to generate a corresponding control operation instruction based on the user voice request.

Specifically, when the target application runs and displays the first interaction page, the voice request sent by the user for the control displayed on the first interaction page can be received, to subsequently perform text conversion and semantic analysis on the voice request and obtain corresponding semantic text data.

Prior to responding to the user voice request, a control text, control identification information, a control number, etc. corresponding to the control displayed on the first interaction page can be obtained through the first interaction page of the target application, and assembled to generate corresponding first control attribute data for subsequent generation of the corresponding control operation instruction. Exemplarily, for a search control on a navigation homepage, a control text may be "search", control identification information may be 01, and a control number may be 1. The control text, the control identification information, the control number, etc. of the search control are obtained and assembled to obtain first control attribute data corresponding to the search control. The first control attribute data is used to generate a corresponding control operation instruction when it is recognized that the user needs to operate the control.

In some cases, the controls displayed on the first interaction page may include some non-click event controls that do not respond to manipulation events, such as label controls, and the first control attribute data corresponding to such controls usually fail to directly generate corresponding control operation instructions. Therefore, when obtaining the control text, the control identification information, and the control number corresponding to the control, rule filtering can be performed to select the control type in the interaction page, and perform filtering on the non-click event controls, to reduce the number of the control identification information and other data corresponding to the obtained control, and reduce operation pressure of the voice interaction method.

Specifically, the control type that needs be obtained can be configured in the control association configuration file in advance. Prior to obtaining the control identification information, the control text and the control number corresponding to the control displayed on the first interaction page, the control type corresponding to the control displayed on the first interaction page is matched with the control type in the control association configuration file based on the control type configured in advance in the control association configuration file, and the controls with matched control types can be selected as target manipulation controls, and the controls with unmatched control types can be filtered.

Further, an object on which the user performs voice interaction is typically content in the current interaction page of the target application. Therefore, the current interaction page can be monitored. When the content of the current interaction page changes, the control identification information and other data of the target control in the changed current interaction page can be obtained in real time, for the subsequent generation of the corresponding control operation instructions. In this way, for any target application mounted in the automotive central control system, the control on the current interaction page can be operated when the target application is running, without additionally developing an interface for interfacing voice interaction control in the target application.

Specifically, subsequent to monitoring that changes in window and page content occur when the current interaction page is switched from the second interaction page to the first interaction page, the controls displayed on the first interaction page are selected and filtered, and the control identification information, control text, and control number corresponding to the filtered target control are obtained from the first interaction page. The control identification information, control text, and other data are assembled to generate corresponding first control attribute data. In some embodiments, the current interaction page may be monitored through an auxiliary service function and/or an interception method of the operation system, and the control identification information, control text, and control number corresponding to the control on the changed current interaction page may be obtained.

Exemplarily, the current interaction page is monitored through the auxiliary service function of the operation system. Subsequent to the window and page content are monitored to change, the controls displayed on the changed interaction page are selected and filtered based on the control type configured in advance in the control association configuration file, and the target manipulation control on the page is determined. The control identification information, the control text, and the control number corresponding to the target manipulation control on the changed page can be obtained by a monitoring callback method, and assembled to generate the corresponding first control attribute data for subsequent matching with the semantic text data, identifying the interaction target control that the user needs to operate and the corresponding control operation type. In some embodiments, the auxiliary service function of the operation system may be an AccessibilityService service function supported by the Android system, and the interception method may be an Aspect interception method.

In some embodiments, subsequent to obtaining the control text, the control identification information, and the control number corresponding to the target manipulation control on the first interaction page, these data can be configured and assembled based on the control association configuration file to generate the corresponding first control attribute data.

At S120, semantic text data corresponding to the user voice request is matched in the first control attribute data to determine an interaction target control corresponding to the semantic text data.

The semantic text data may include control text of the interaction target control. The first control attribute data may be a data set including control text of all target manipulation controls on the first interaction page.

Specifically, subsequent to receiving the user voice request, semantic analysis is performed on the voice request to obtain the corresponding semantic text data. Based on the control text of the interaction target control included in the semantic text data, the control texts of all the target manipulation controls on the first interaction page are matched, and the target manipulation control corresponding to the control text is found and determined as the interaction target control.

Exemplarily, in the navigation homepage, the user voice request "Searching for the Oriental Pearl Tower" is received, and text conversion and analysis are performed on the user voice request "Searching for the Oriental Pearl Tower" to obtain corresponding semantic text data including "Search" and "Oriental Pearl Tower". Based on the semantic text data, the control texts corresponding to all the target manipulation controls on the navigation homepage are matched, and the control text identical to "search" can be found. In this way, the search control corresponding to the control text of "search" is found and determined as the interaction target control.

At S130, a control operation instruction is generated based on a control operation type of the interaction target control.

The control operation type corresponds to the control type. For example, if the control type is a button, the corresponding control operation type may be click, double click, long press, etc. If the control type is a selection box, the corresponding control operation type may be check, etc. If the control type is a drag bar, the corresponding control operation type may be drag, etc. If the control type is a text box, and the corresponding control operation type may be input text, etc.

Specifically, subsequent to determining the interaction target control corresponding to the semantic text data, the corresponding control operation type may be identified based on the type of the interaction target control, to parse the semantic text data to obtain the behavior relationship data corresponding to the control operation behavior of the interaction target control, in such a manner that the control operation instruction for operating the interaction target control can be generated.

Exemplarily, subsequent to finding the search control based on the semantic text data, the type of the search control can be identified as a compound control of a text control and a button control, in such a manner that the corresponding control operation type may be identified as inputting text in the text control and clicking the button control. Combining the semantic text data "Search" and "Oriental Pearl Tower" and the control operation type of the search control, an instruction for operating the search control is generated, which may include clicking a search button control subsequent to inputting "Oriental Pearl Tower" in a search text control.

At S140, the control operation instruction is executed to output a response to the user voice request.

The response may be a result of executing the control operation instruction.

Specifically, based on the control operation instruction, the control operation interface may be called to execute a corresponding operation on the interaction target control on the first interaction page, and a result of executing the operation may be fed back to the current interaction page for display. In some embodiments, the control operation interface may be provided by an auxiliary service function of the automotive central control system in which the target application is located. In other embodiments, the control operation interface may be obtained by an interception method.

Exemplarily, based on the generated instruction for operating the search control, the control operation interface provided by the auxiliary service function of the automotive central control system in which the target application is located is called, and the corresponding search operation is performed on the search control on the navigation homepage, which may include inputting "Oriental Pearl Tower" in the search box, clicking the search button. A search result may be that a route from the current location to the Oriental Pearl Tower is obtained, thus the route is fed back to the current interaction page for display.

In the above embodiments, the rule filtering is implemented through the control association configuration file, to reduce the number of the control identification information and other data corresponding to the control obtained in the current interaction page, improving an efficiency of voice interaction. By monitoring changes in the window and page content of the current interaction page, and obtaining the control identification information and other data corresponding to the control in the changed current interaction page subsequent to monitoring the changes, real-time obtaining of the control identification information and other data in the current interaction page is realized. By decoupling the user's voice recognition and semantic analysis from the specific target application control, isolation between semantic behavior analysis and control operation is realized. Compared with a traditional method for realizing the voice interaction control of the target application in the automotive central control system through an interface for interfacing with the voice operation of the target application, this method does not need to additionally develop the interface for interfacing with the voice interaction control in the target application, which can greatly reduce development costs of the target application, and can simultaneously avoid a situation that a third-party target application mounted in the automotive central control system does not support the voice interaction due to an inability of interfacing with the voice operation interface.

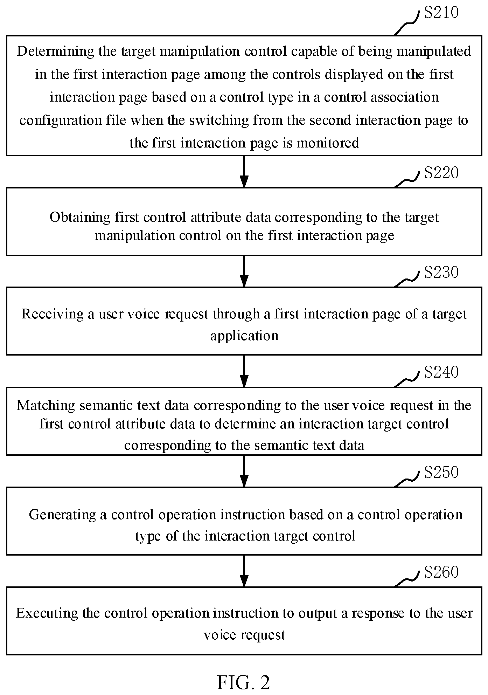

Embodiments of this specification provide a voice interaction method. Referring to FIG. 2, the method may include the following operations.

At S210, when switching from a second interaction page to a first interaction page is monitored, a target manipulation control capable of being manipulated in the first interaction page is determined among controls displayed on the first interaction page based on a control type in a control association configuration file.

At S220, first control attribute data corresponding to the target manipulation control displayed on the first interaction page is obtained.

At S230, a user voice request is received through the first interaction page of a target application.

At S240, semantic text data corresponding to the user voice request in the first control attribute data is matched to determine an interaction target control corresponding to the semantic text data.

At S250, a control operation instruction is generated based on a control operation type of the interaction target control.

At S260, the control operation instruction is executed to output a response to the user voice request.

Specifically, when the switching from the second interaction page to the first interaction page is monitored, the control type of the control object in the first interaction page is selected and filtered based on the control type configured in advance in the control association configuration file, and the corresponding control that matches the control type in the control association configuration file is determined as the target manipulation control. Control identification information, a control text, and a control number corresponding to the target manipulation control are obtained from the first interaction page, and the control identification information, control text and other data are assembled to generate the corresponding first control attribute data.

The voice request from the user for the control displayed on the first interaction page is received, and semantic analysis is performed on the voice request to obtain the corresponding semantic text data. Based on the control text of an interaction target control included in the semantic text data, the control texts of the first control attribute data of all the target manipulation controls on the first interaction page are matched, and the target manipulation control corresponding to the control text is found and determined as the interaction target control.

The corresponding control operation type is identified based on the type of the interaction target control, to parse the semantic text data to obtain behavior relationship data corresponding to control operation behavior of the interaction target control, in such a manner that the control operation instruction for operating the interaction target control can be generated.

Based on the control operation instruction, a control operation interface is called to execute a corresponding operation on the interaction target control on the first interaction page, and a result of executing the operation may be fed back to the current interaction page for display.

In some embodiments, when a control of the target application is updated, the control association configuration file is modified to generate a new control association configuration file, the new control association configuration file is used to determine the target manipulation control on an updated interaction page of the target application.

The control association configuration file may include a control association rule used to perform association configuration on the control identification information and the control text of the target manipulation control. The target manipulation control may have an association with other controls.

In some cases, some controls of the target application may be displayed using icons, or the controls are separated from control text content. Usually, the corresponding control text associated with such controls is unable to be directly obtained, in such a manner that the interaction target control corresponding to the semantic text data fails to be accurately determined from them. Since the identification information of the control is unique, the control text corresponding to the control identification information may be configured, which enables the control identification information to be found through the identified control text, finding the corresponding control.

Specifically, the control identification information, the control text, etc. corresponding to the obtained target manipulation control can be configured according to the control association rule in the control association configuration file. When the control of the target application is updated, the control association rule of the control association configuration file is modified accordingly to generate the new control association configuration file. The new control association configuration file is published, in such a manner that subsequent to updating the interaction page of the target application, when the switching from the second interaction page to the first interaction page is monitored, the new control association configuration file can be obtained for determining the target manipulation control on the first interaction page subsequent to updating the control, and for configuring the control identification information, the control text, etc. of the target manipulation control to generate new first control attribute data. The new first control attribute data is matched with the semantic text data to generate the corresponding control operation instruction. The configured first control attribute data can better match logic for behavioral analysis of the semantic text data than the first control attribute data that is not configured. When a new function appears in the target application, configuration modification of the first control attribute data can be realized only by correspondingly modifying the control association configuration file, realizing addition or modification of the control operation. In some embodiments, the control association configuration file may employ be a JSON file.

In the above embodiments, by modifying the control association configuration file, the configuration modification of the control attribute data can be realized, and the addition or modification of the control operation of the target application can be realized without modifying the code for implementing the control operation. For a new target application, an interface for interfacing with voice interaction control is not needed, and there is no need to add corresponding logic in the code for implementing control operation. By modifying the control association configuration file, the control of the new target application can be supported to operate. The control association configuration file supports online modification, and subsequent to modifying the control association configuration file and publishing it, the new control association configuration file can be obtained when the control attribute data corresponding to the control needs to be obtained.

In some embodiments, second control attribute data corresponding to the target manipulation control on the second interaction page is stored in a cache space. The voice interaction method further includes at least one of the following: when the second control attribute data is inconsistent with the first control attribute data, clearing the second control attribute data in the cache space and storing the first control attribute data in the cache space; and when the second control attribute data is consistent with the first control attribute data, retaining the second control attribute data in the cache space and discarding the first control attribute data.

The control attribute data in the cache space may be used to match the semantic text data to determine the interaction target control.

In some cases, when the switching from the second interaction page to the first interaction page is monitored, page content of the current interaction page changes, but the target manipulation control may be the same. For example, during a video playback process, in the obtained first control attribute data on a current video playback page and the second control attribute data on the video playback page obtained 5 seconds ago, except for the different video display content, other target manipulation controls are not changed, and the corresponding first control attribute data and second control attribute data are the same. In this case, it may not be necessary to update the second control attribute data to the first control attribute data, to save voice interaction performance. Therefore, the cache space may be set for comparing the first control attribute data and the second control attribute data, to determine whether the target manipulation controls on the first interaction page and the second interaction page are the same.

In some embodiments, whether the second control attribute data is consistent with the first control attribute data may be determined through a MD5 information summary value. Specifically, MD5 information summary values of all target manipulation controls corresponding to the second control attribute data in the cache space and the obtained first control attribute data are each calculated and compared. If the MD5 information summary value corresponding to the second control attribute data is inconsistent with the MD5 information summary value corresponding to the first control attribute data, the cache space is cleared and the first control attribute data is stored in the cache space. If the MD5 information summary value corresponding to the second control attribute data is consistent with the MD5 information summary value corresponding to the first control attribute data, the second control attribute data in the cache space is retained, and the first control attribute data is discarded.

In some embodiments, the voice interaction method obtains the first control attribute data corresponding to the control displayed on the first interaction page by obtaining, based on a message queue, the first control attribute data corresponding to the control displayed on the first interaction page.

The message queue may be used to control the frequency of monitoring the switching from the second interaction page to the first interaction page and obtaining the first control attribute data.

In some cases, the window and page content of the current interaction page may be constantly changing, and a corresponding change frequency may be high. If the control attribute data of the control on the changed page is obtained subsequent to monitoring the change of the current interaction page, the frequency of obtaining is too high, which may affect the voice interaction performance. Therefore, the message queue can be set, and the frequency of obtaining the control attribute data can be controlled through the frequency control function of the message queue, to prevent a frequency explosion from affecting performance of the automotive central control system and reduce consumption of the automotive central control system.

Specifically, subsequent to obtaining the first control attribute data according to the method of any one of the above embodiments, the first control attribute data is transmitted to the message queue. The message queue processes the first control attribute data in the queue at regular intervals, for example, sends it to the cache space. In some embodiments, the message queue may process the first control attribute data in the queue every 10 seconds.

When no pop-up window appears on the first interaction page, the first control attribute data corresponding to other controls on the first interaction page except a progress control is obtained by calling an auxiliary service function of an operation system.

The operation system is the automotive central control system. The auxiliary service function can be configured to provide the user with auxiliary services for replacement or enhanced feedback, support obtaining controls on the interaction page except a progress bar control, and can provide the control operation interface, with abilities to click, double-click, check, long press, drag, and other manipulations on the control. The first control attribute data may be generated by assembling the control text, the control identification information, the control number, etc. corresponding to the control.

Specifically, when no pop-up window appears on the first interaction page, all the controls on the first interaction page are visible to the auxiliary service function of the operation system. The control text, the control identification information, the control number, etc. corresponding to other controls on the first interaction page except the progress control may be obtained through the auxiliary service function of the operation system, and assembled according to certain rules to generate the first control attribute data. In some embodiments, the auxiliary service function of the operation system may be an AccessibilityService auxiliary service function supported by the Android system.

When the pop-up window appears on the first interaction page, the first control attribute data corresponding to the control displayed on the first interaction page is obtained by an Aspect interception method.

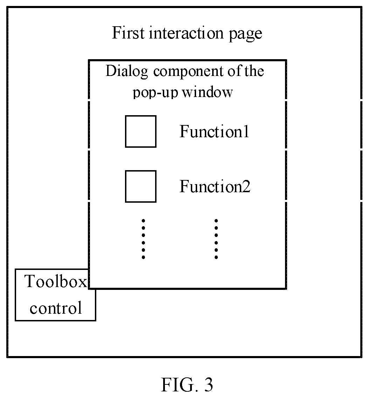

In some cases, referring to FIG. 3, a Dialog component of the pop-up window on the first interaction page rises. A toolbox control under the component can be visible to the user, but since the toolbox control is covered by the Dialog component, the toolbox control is invisible to the auxiliary service function of the operation system. That is, the auxiliary service function of the operation system fails to obtain the control attribute data corresponding to the toolbox control under the Dialog component. Therefore, the control attribute data corresponding to such controls can be obtained by the Aspect interception method.

Specifically, a control object under the pop-up window on the first interaction page is hooked by the Aspect interception method to obtain the control attribute data corresponding to the hooked control object. When it is necessary to execute the corresponding control operation instruction on the hooked control object, the corresponding control operation interface can be called by a reflection method.

When the first interaction page has the progress control, the first control attribute data corresponding to the progress control on the first interaction page is obtained by the Aspect interception method.

In some cases, the auxiliary service function of the operation system supports most operations such as clicking, long pressing, double-clicking, and checking on the control, but for the progress bar control, the auxiliary service function of the operation system fails to call corresponding methods such as numerical value setting. Therefore, in this embodiment, the control attribute data corresponding to the progress bar control is obtained by the Aspect interception method, and the operation on the progress bar control is realized.

Specifically, a progress bar control object on the first interaction page is hooked by the Aspect interception method to obtain control attribute data corresponding to the hooked control object. When it is necessary to execute the corresponding control operation instruction on the hooked progress bar control, the control operation method of the progress bar control can be called by the reflection method, realizing the operation of the progress bar control. Exemplarily, a setRate method of the progress bar control can be called by an invoke reflection method to set a specific value on the progress bar control.

It should be noted that, in some cases, the control on the first interaction page can be completely obtained and the corresponding control operation instruction can be executed on the control by using the Aspect interception method, but the target application needs to integrate a corresponding function package, that is, a Jar package corresponding to the Aspect function. If the target application does not integrate the Jar package, it is unable to interface the see-and-say function. In the above embodiments, the control attribute data corresponding to the control on the interaction page may be obtained by combining the auxiliary service function of the operation system with the Aspect interception method, and the control may be manipulated to execute the control operation instruction. When the target application is not connected to the Jar package, the auxiliary service function of the operation system can interface with the see-and-say function. When the progress bar control and the control covered by the pop-up window are not required to be manipulated through voice interaction, the auxiliary service function of the operation system can realize voice interaction manipulation of most controls on the interaction page, which will not have any impact on the target application. When the target application needs to manipulate the progress bar control and the control covered by pop-up window through voice interaction, the Jar package corresponding to the Aspect function can be integrated into the target application, and the auxiliary service function of the operation system and the Aspect interception method can be combined to support a more complete see-and-say function. By combining the auxiliary service function of the operation system with the Aspect interception method, a situation that the target application is completely unable to interface with the voice interaction function can be avoided.

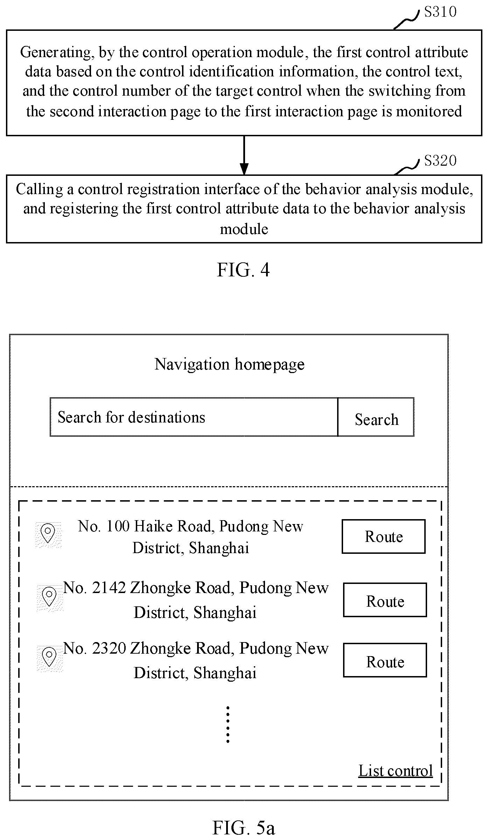

In some embodiments, the target application has a behavior analysis module and a control manipulation module. Referring to FIG. 4, the first control attribute data is generated by the following operations.

At S310, the first control attribute data is generated, by the control operation module, based on the control identification information, the control text, and the control number of the target control when the switching from the second interaction page to the first interaction page is monitored.

The control identification information is an ID value that uniquely identifies the control, and the control number may be a number value that is used for auxiliary identification of the same control. The first control attribute data may be data used to describe one control and distinguish it from other controls.

The target application may be connected to the control operation module through the control operation interface, and the control operation module may be configured to interface the behavior analysis module with the control in the target application. Specifically, the content on the current interaction page is monitored by the control operation module. When the switching from the second interaction page to the first interaction page is monitored, the target manipulation control on the first interaction page may be determined by the control operation module based on the control type in the control association configuration file. The control identification information, control text, and control number corresponding to the target manipulation control on the first interaction page are obtained by the control operation module, and these data are configured and assembled based on the control association configuration file to generate the first control attribute data.

In some embodiments, the first control attribute data may be a control message. Monitoring the interaction page and obtaining the control identification information, the control text, and the control number corresponding to the control through the control operation module can be realized by using the auxiliary service function of the operation system or the Aspect interception method, or by using the auxiliary service function of the operation system with the Aspect interception method.

It should be noted that, the control operation module may be configured to obtain the control identification information, the control text, and the control number corresponding to all controls on the first interaction page for all controls, or may also be configured to obtain the control identification information, the control text, and the control number corresponding to the target manipulation control on the first interaction page based on the control type in the control association configuration file.

At S320, a control registration interface of the behavior analysis module is called, and the first control attribute data is registered to the behavior analysis module.

The behavior analysis module may be configured to match the semantic text data in the first control attribute data to determine the interaction target control corresponding to the semantic text data.

Specifically, the control operation module calls the control registration interface defined by the behavior analysis module to register the first control attribute data generated by the control operation module to the behavior analysis module. In some embodiments, the first control attribute data can be registered in a control cache space through the control operation module, and the semantic text data is matched with the first control attribute data in the control cache space through the behavior analysis module.

In the above embodiments, the behavior analysis module is interfaced with the control operation module through interfaces. Each of them is responsible for corresponding functions and processes, and technical selection of the behavior analysis module and the control operation module does not affect each other.

In some embodiments, said registering the first control attribute data to the behavior analysis module may include: registering the first control attribute data to the behavior analysis module according to a predefined control association rule in the control association configuration file.

The control association rule may be used to associate the control identification information with the control text, in such a manner that the interaction target control can be accurately determined.

In some cases, some controls of the target application may be displayed using icons, or the controls are separated from control text content. Usually, the corresponding control text associated with such controls is unable to be directly obtained. Since the identification information of the control is unique, the control association rule may be predefined, and the control text corresponding to the control identification information may be configured, which enables the identification information to be found through the identified control text, finding the corresponding control.

In other cases, for example, in the list control, the control identification information corresponding to each element of the same type is the same, i.e., the identification information of the list control, and the corresponding control text may also be the same. In this case, it is unable to accurately identify which element in the list control is the interaction target control only through the control text. Since some controls may have certain associations, the control association rule can be predefined to associate the control texts used to uniquely determine the control together with control identification information, in such a manner that the corresponding control can be accurately found through the identified associated text.

Specifically, through the control operation module, the obtained control identification information, the control text, and the control number are correspondingly configured according to the predefined control association rule in the control association configuration file, the configured content is assembled into the first control attribute data, the control registration interface defined by the behavior analysis module is called through the control operation module, and the first control attribute data is registered to the behavior analysis module.

Exemplarily, referring to FIG. 5a, on the navigation homepage, results of address search are presented in a form of a list having a button with a control text "route" in each item of the list. If "route" is directly used as a control text of a recognition button and is involved in a process of matching with semantic text data, it is unable to accurately determine which item in the list the "route" button needs to be identified is. Considering that each "route" button can be associated and determined by a title text (that is, address text) of the list item in which it is located, association between the "route" button and the title text of the list item in which it is located can be written into the control association rule for configuring the control text of the "route" button.

In some embodiments, the control association rule may be a JSON rule. Exemplarily, continuing to refer to FIG. 5a, the corresponding control association rules may be represented as follows:

```
 {
 "page": "Navigation homepage"
 "com.zeekr.automap: id/slv_search_button": {
 "des": "search",
 "itemType": "button"
 }
 "com.zeekr.automap: id/slv_search_list": {
 "des": "route",
 "itemid": "com.zeekr.automap: id/cl_auto_search_listview_item",
 "itemdes": "com.zeekr.automap: id/cl_auto_search_listview_title",
 "itemType": "list"
 }
 }
```

The above control association rules indicate that there are two controls on the navigation homepage. Control identification information id of a first control is com.zeekr.automap: id/slv_search_button, and a corresponding control text is "search". Control identification information id of a second control is com.zeekr.automap: id/slv_search_list, and a corresponding control text is "route". itemid is used to define a control operation type identifier corresponding to each element in the second control. itemdes is used to define a text corresponding to each element in the second control. By identifying itemid and itemdes, the element of each item in the list and the corresponding operation type can be defined. For example, "No. 100 Haike Road, Pudong New District, Shanghai" (this text is the text of the id corresponding to itemdes, that is, com.zeekr.automap: id/cl_auto_search_listview_title) and the text "route" defined by des of the second control are used together as an identification text of a first route button, and the control operation type identification of the first route button is generated by the button control (i.e. com.zeekr.automap: id/cl_auto_search_listview_item).

The above configured content is assembled into control attribute data through the control operation module, and the control attribute data is registered to the behavior analysis module by calling the control registration interface defined by the behavior analysis module. When the user says "No. 100 Haike Road, Pudong New District, Shanghai" and "Route", the semantic text data may be matched by the behavior analysis module to determine that the user needs to click the route button corresponding to "No. 100 Haike Road, Pudong New District, Shanghai", in such a manner that the control operation instruction of the button control can be generated. The control operation module clicks the first route button based on the control operation instruction, selecting the route of "No.100 Haike Road, Pudong New District, Shanghai".

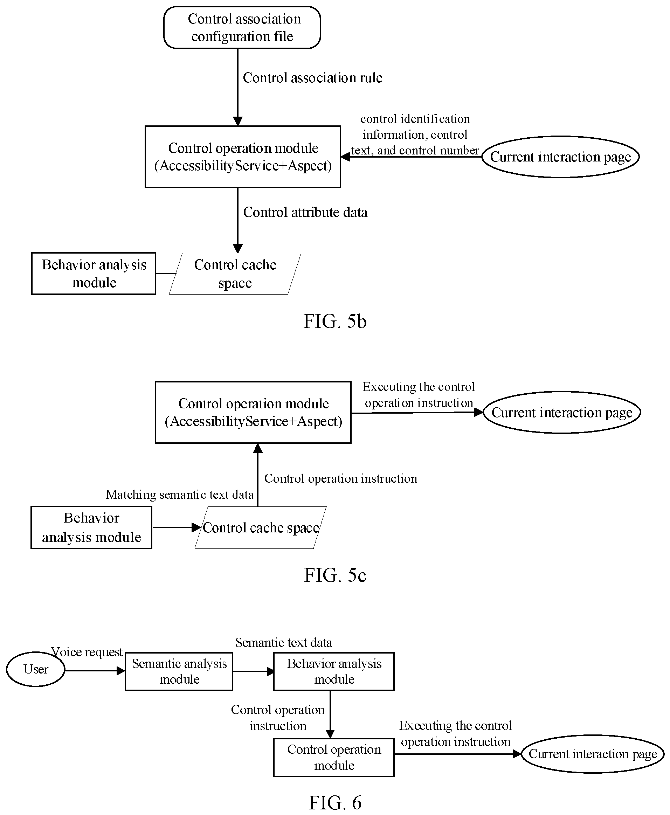

Exemplarily, FIG. 5b is a schematic diagram showing a control message registration process between a control operation module and a behavior analysis module. Referring to FIG. 5b, the control information registration process may include: using, by the control operation module, the AccessibilityService and Aspect method to obtain the control identification6 information, the control text, and the control number corresponding to the control on the current interaction page, and configuring and assembling these data according to the predefined control association rule in the control association configuration file to obtain the first control attribute data. The control operation module calls the control registration interface defined by the behavior analysis module to register the first control attribute data into the control cache space.

In the above embodiment, the control association rule is used to configure the control, which facilitates to adding or modifying the control manipulation of the target application without modifying the code of the control operation module. Also, the control association configuration file supports online configuration and publication, thus it is not necessary to upgrade the function of the related module through over-the-air download technology.

In some embodiments, the voice interaction method may further include, prior to said executing the control operation instruction: receiving, via an instruction sending interface of the control operation module, the control operation instruction sent by the behavior analysis module.

Specifically, the behavior analysis module may match the control text of the interaction target control included in the user's semantic text data in the first control attribute data, find the control corresponding to the control text, and determine it as the interaction target control. The corresponding control operation type is identified based on the type of the interaction target control, to parse the semantic text data to obtain the behavior relationship data corresponding to control operation behavior of the interaction target control, in such a manner that the control operation instruction for operating the interaction target control can be generated. The behavior analysis module calls the instruction sending interface of the control operation module and sends the generated control operation instruction to the control operation module. The control operation module receives the control operation instruction and may perform corresponding operations on the interaction target control.

In some embodiments, the semantic text data may be obtained by performing text conversion and semantic analysis on the received user voice request by the semantic analysis module. The behavior analysis module may be configured to interface the semantic analysis module and the control operation module.

Said executing the control operation instruction includes: calling a control operation interface of the control operation module and executing the control operation instruction on the interaction target control.

Exemplarily, FIG. 5c is a schematic diagram showing a control operation interaction process between a behavior analysis module and a control operation module. Referring to FIG. 5c, the interaction process of the control operation may include: matching, by the behavior analysis module, the semantic text data in the control text of the first control attribute data in the control cache space, determining the interaction target control and the corresponding control operation type of the interaction target control, and generating the corresponding control operation instruction. The behavior analysis module calls the instruction sending interface of the control operation module and sends the control operation instruction to the control operation module. Subsequent to receiving the control operation instruction, the control operation module calls the control operation interface to perform corresponding operations on the interaction target control on the current interaction page.

In some embodiments, the control operation interface may be provided by the auxiliary service function of the operation system, and the auxiliary service function of the operation system may be the AccessibilityService service function of the Android system. Specifically, subsequent to receiving the control operation instruction through the control operation module, the control operation interface provided by the AccessibilityService service function may be called to perform corresponding control operations on the interaction target control, including most control operations such as clicking, double-clicking, checking, long pressing, and dragging.

In other embodiments, the control operation interface may be obtained by the Aspect interception method. Specifically, the control object displayed on the first interaction page is hooked by the control operation module with the aspect interception method. When the corresponding control operation instruction needs to be executed on the hooked interaction target control object, the control operation method for the interaction target control object can be called with the reflection method to realize the operation on the interaction target control. By using the control operation interface obtained by the Aspect interception method, complete control operation can be realized.

Since that the control operation interface obtained by the Aspect interception method is called to execute the control operation instruction, it requires integrating the Jar package corresponding to the corresponding Aspect function in the target application, the control operation instruction can be executed by combining the auxiliary service function of the operation system with the Aspect interception method. When there is no operation requirement for the progress bar control and the control covered by the pop-up window, the control operation of the control on the interaction page can be realized by calling the control operation interface provided by the auxiliary service function of the operation system. When there is an operation requirement for the progress bar control and the control covered by the pop-up window, the Jar package corresponding to the Aspect function can be integrated into the target application, and the control operation interface obtained by the Aspect interception method can be called to realize the corresponding control operation.

In some embodiments, the first control attribute data includes the control text of the control. Said matching semantic text data corresponding to the user voice request in the first control attribute data to determine the interaction target control corresponding to the semantic text data includes: determining the interaction target control corresponding to the semantic text data based on a matching result between the semantic text data corresponding to the user voice request and the control text of the control.

The semantic text data may be obtained by performing the text conversion and semantic analysis on the user voice request by the semantic analysis module.

Specifically, referring to FIG. 6, the user voice request can be received by the semantic analysis module, and the semantic analysis module performs the text conversion and semantic analysis on the user voice request, to parse and obtain the corresponding semantic text data and send it to the behavior analysis module. The semantic text data is received by the behavior analysis module, and is matched in the control text included in the first control attribute data by the behavior analysis module. The control corresponding to the control text matched with the text in the semantic text data is determined as the interaction target control, and the corresponding control operation type is identified based on the type of the interaction target control, to associate the interaction target control and the corresponding control operation type, and parse the corresponding behavior relationship data. The control operation instruction for the interaction target control is generated by the behavior analysis module, and sent to the control operation module through the instruction sending interface. The control operation instruction is received by the control operation module, and the control operation interface is called to execute the corresponding control operation instruction on the interaction target control, to complete the control of the target application through voice interaction.

It should be noted that, the semantic analysis module may adopt mature semantic analysis technology, the behavior analysis module may adopt mature behavior analysis technology, and technical selection of the semantic analysis module and the behavior analysis module does not affect each other.

In the above embodiments, three modules of semantic analysis, behavior analysis, and control operation are divided according to a process of manipulating the control of the target application through voice interaction. The semantic analysis module, the behavior analysis module, and the control operation module are each responsible for a special part of the process, and technical selection of the three modules does not affect each other, in such a manner that decoupling of semantic analysis, behavior resolution, and specific control operation can be realized. Whether it is a target application developed by a service provider that provides the see-and-say function, or a target application provided by a third party, both can interface with the see-and-say function of the automotive central control system without additionally developing interfaces for semantic analysis or behavior resolution functions.

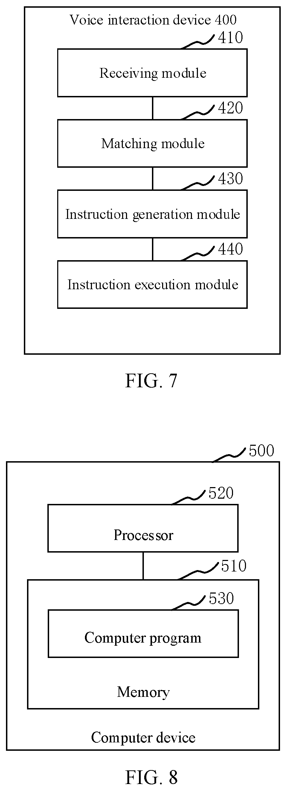

Embodiments of this specification provide a voice interaction apparatus applied to an automotive central control system. Referring to FIG. 7, the voice interaction apparatus 400 may include a receiving module 410, a matching module 420, an instruction generation module 430, and an instruction execution module 440.

The receiving module 410 is configured to receive a user voice request through a first interaction page of a target application. A target manipulation control is displayed on the first interaction page. The target manipulation control is a control capable of being manipulated and is determined among controls displayed on the first interaction page of the target application based on a control type in a control association configuration file. The target manipulation control corresponds to first control attribute data. The first control attribute data is generated based on control identification information, a control text, and a control number of the target manipulation control when switching from a second interaction page to the first interaction page is monitored.

The matching module 420 is configured to match semantic text data corresponding to the user voice request in the first control attribute data to determine an interaction target control corresponding to the semantic text data.

The instruction generation module 430 is configured to generate a control operation instruction based on a control operation type of the interaction target control.

The instruction execution module 440 is configured to execute the control operation instruction to output a response to the user voice request.

Specific limitations of the voice interaction apparatus can refer to the limitations of the voice interaction method described above, and thus details thereof will be omitted here. Each module in the voice interaction apparatus described above may be implemented in whole or in part by software, hardware, and combinations thereof. The above modules may be embedded in or independent of a processor in a computer device in a form of hardware, or may be stored in a memory in the computer device in a form of software, which is convenient for the processor to call and execute operations corresponding to each of the above modules.

Embodiments of the present specification further provide a computer device. Referring to FIG. 8, the computer device 500 includes a memory 510, a processor 520, and a computer program 530 stored on the memory 510 and executable on the processor 520. When the processor 520 executes the computer program 530, the voice interaction method of any of the above embodiments is implemented.

Embodiments of the present disclosure further provide a computer-readable storage medium having a computer program stored thereon. The computer program, when executed by a processor, implements the voice interaction method of any of the above embodiments.

It should be noted that, the logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics may be combined in any suitable manner in one or more embodiments or examples.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

Although embodiments of the present disclosure have been illustrated and described above, it should be understood that the above embodiments are merely exemplary, and cannot be construed to limit the present disclosure. For those skilled in the art, changes, alternatives, and modifications can be made to the embodiments without departing from the scope of the present disclosure.

## Claims

1. A voice interaction method, applied to an automotive central control system, the method comprising:
receiving a user voice request through a first interaction page of a target application, wherein a target manipulation control is displayed on the first interaction page, the target manipulation control is a control capable of being manipulated and is determined among the controls displayed on the first interaction page of the target application based on a control type in a control association configuration file, the target manipulation control corresponds to first control attribute data, and the first control attribute data is generated based on control identification information, a control text, and a control number of the target manipulation control when switching from a second interaction page to the first interaction page is monitored;
matching semantic text data corresponding to the user voice request in the first control attribute data to determine an interaction target control corresponding to the semantic text data;
generating a control operation instruction based on a control operation type of the interaction target control; and
executing the control operation instruction to output a response to the user voice request.

2. The method according to claim 1, wherein when a control of the target application is updated, the control association configuration file is modified to generate a new control association configuration file, the new control association configuration file being used to determine the target manipulation control on an updated interaction page of the target application.

3. The method according to claim 1, wherein second control attribute data corresponding to the target manipulation control on the second interaction page is stored in a cache space, and the method further comprises at least one of the following:
when the second control attribute data is inconsistent with the first control attribute data, clearing the second control attribute data in the cache space and storing the first control attribute data in the cache space; and
when the second control attribute data is consistent with the first control attribute data, retaining the second control attribute data in the cache space and discarding the first control attribute data.

4. The method according to claim 1, wherein the first control attribute data corresponding to the control displayed on the first interaction page is obtained by at least one of the following:
obtaining, based on a message queue, the first control attribute data corresponding to the control displayed on the first interaction page;
obtaining, when no pop-up window appears on the first interaction page, the first control attribute data corresponding to other controls on the first interaction page except a progress control by calling an auxiliary service function of an operation system;
obtaining, when the pop-up window appears on the first interaction page, the first control attribute data corresponding to the control displayed on the first interaction page by an Aspect interception method; and
obtaining, when the first interaction page has the progress control, the first control attribute data corresponding to the progress control on the first interaction page by the Aspect interception method.

5. The method according to claim 1, wherein the target application has a behavior analysis module and a control operation module, and the first control attribute data is generated by:
generating, by the control operation module, the first control attribute data based on the control identification information, the control text, and the control number of the target control when the switching from the second interaction page to the first interaction page is monitored; and
calling a control registration interface of the behavior analysis module, and registering the first control attribute data to the behavior analysis module.

6. The method according to claim 5, wherein said registering the first control attribute data to the behavior analysis module comprises:
registering the first control attribute data to the behavior analysis module according to a predefined control association rule in the control association configuration file.

7. The method according to claim 5, wherein the method further comprises, prior to said executing the control operation instruction:
receiving, via an instruction sending interface of the control operation module, the control operation instruction sent by the behavior analysis module;
wherein said executing the control operation instruction comprises:
calling a control operation interface of the control operation module and executing the control operation instruction for the interaction target control.

8. The method according to any one of claims 1 to 7, wherein the first control attribute data comprises the control text of the control; and
wherein said matching the semantic text data corresponding to the user voice request in the first control attribute data to determine the interaction target control corresponding to the semantic text data comprises:
determining the interaction target control corresponding to the semantic text data based on a matching result between the semantic text data corresponding to the user voice request and the control text of the control.

9. A voice interaction apparatus, applied to an automotive central control system, the apparatus comprising:
a receiving module configured to receive a user voice request through a first interaction page of a target application, wherein a target manipulation control is displayed on the first interaction page, the target manipulation control is a control capable of being manipulated and is determined among controls displayed on the first interaction page of the target application based on a control type in a control association configuration file, the target manipulation control corresponds to first control attribute data, and the first control attribute data is generated based on control identification information, a control text, and a control number of the target manipulation control when switching from a second interaction page to the first interaction page is monitored;
a matching module configured to match semantic text data corresponding to the user voice request in the first control attribute data to determine an interaction target control corresponding to the semantic text data;
an instruction generation module configured to generate a control operation instruction based on a control operation type of the interaction target control; and
an instruction execution module configured to execute the control operation instruction to output a response to the user voice request.

10. A computer device, comprising:
a memory; and
a processor,
wherein the memory has a computer program stored thereon, and the processor implements, when executing the computer program, the method according to any one of claims 1 to 8.

11. A computer-readable storage medium, having a computer program stored thereon, wherein the computer program, when executed by a processor, implements the method according to any one of claims 1 to 8.
